# EUROPEAN PATENT APPLICATION

(11) **EP 4 790 866 A1**
(43) Date of publication of application: **12.08.2026**
(21) Application number: 23954640.1
(22) Date of filing: 08.11.2023
(51) Int. Cl.: H02J 7/00, H02J 50/10, H02J 50/90, E01H 5/00, E01H 5/04

(54) **WIRELESS CHARGING BASE AND CHARGING SYSTEM OF AUTOMATIC SNOW CLEARING DEVICE**

(30) Priority: 07.10.2023 CN 202322679617 U; 07.10.2023 CN 202311299166
(71) Applicant: Shenzhen Hanyang Technology Co., Ltd., Shenzhen, Guangdong 518000 (CN)
(72) Inventor: ZHU, Taotao, Shenzhen, Guangdong 518000 (CN); SONG, Yongqi, Shenzhen, Guangdong 518000 (CN); WEI, Hanfeng, Shenzhen, Guangdong 518000 (CN)
(74) Representative: Abel & Imray LLP
(86) International application number: PCT/CN2023/130532
(87) International publication number: WO 2025/073128

(57) **Abstract**

A wireless charging base and a charging system of an automatic snow clearing device. The wireless charging base comprises a mounting assembly and a charging assembly. An upper end face of the mounting assembly and a support face of the wireless charging base are oppositely arranged at a preset included angle, or the upper end face of the mounting assembly is provided with a first side and a second side, and the distance between the upper end face and the support face gradually increases from the first side to the second side so as to be adapted to movement of the automatic snow clearing device from the first side to the second side.

## Description

### Priority

The application claims the priority and benefit of the patent application No.202322679617.8 filed with State Intellectual Property Office of P.R.China, on Oct. 7, 2023, the contents of which are incorporated herein by reference in their entirety.

The application claims the priority and benefit of the patent application No.202311299166.3filed with State Intellectual Property Office of P.R.China, on Oct. 7, 2023, the contents of which are incorporated herein by reference in their entirety.

### Technical field

The present disclosure relates to the field of automatic snow clearing devices, and in particular to a wireless charging base and a charging system of an automatic snow clearing device.

### Background

With the rapid development of science and technology, automatic snow clearing devices have become a commonly used snow sweeping tool in winter. In the spirit of low carbon and environmental protection, automatic snow clearing devices are usually electric.

### Summary of the invention

An embodiment of the present application provides a wireless charging base used for charging an automatic snow clearing device. The wireless charging base comprises a mounting assembly and a charging assembly. The charging assembly is arranged on the mounting assembly and is used for charging the automatic snow clearing device. An upper end face of the mounting assembly and a support face of the wireless charging base are oppositely arranged at a preset included angle, so as to allow the automatic snow clearing device to move from a low position of the upper end face to a high position thereof; or the upper end face of the mounting assembly has a first side and a second side opposite to each other, and a distance between the upper end face and the support face of the wireless charging base gradually increases from the first side to the second side, so as to allow the automatic snow clearing device to move from the first side to the second side.

Another embodiment of the present application further provides a wireless charging base used for charging an automatic snow clearing device. The wireless charging base comprises a mounting assembly and a charging assembly. The charging assembly is arranged on the mounting assembly and is used for charging the automatic snow clearing device. A minimum height of the upper end face of the mounting assembly relative to the support face of the wireless charging base is not greater than 10 mm.

Another embodiment of the present application further provides a wireless charging base used for charging an automatic snow clearing device. The wireless charging base comprises a mounting assembly and a charging assembly. The charging assembly is arranged on the mounting assembly and is used for charging the automatic snow clearing device. The mounting assembly is embedded and fixed at a preset position of the ground, and a minimum height of an upper end face of the mounting assembly relative to the ground is not greater than 10 mm, so that the automatic snow clearing device is able to move from a non-preset position of the ground to the preset position without lifting its head.

Another embodiment of the present application further provides a wireless charging base used for charging an automatic snow clearing device. The wireless charging base comprises a mounting assembly and a charging assembly. The charging assembly is arranged on the mounting assembly and is used for charging the automatic snow clearing device. The mounting assembly is embedded and fixed at a preset position of the ground, and the upper end face of the mounting assembly is flush with the ground, so that the automatic snow clearing device is able to move from a non-preset position of the ground to the preset position without lifting its head.

Another embodiment of the present application further provides a wireless charging base comprising a mounting assembly, a charging assembly, and a transition piece. The charging assembly is arranged on the mounting assembly and is used for charging an automatic operation device or an automatic snow clearing device. The transition piece is arranged on a front side of the mounting assembly, and is adapted to guide the automatic operation device or the automatic snow clearing device to move from the transition piece to the mounting assembly. The transition piece is detachably connected with the mounting assembly.

Another embodiment of the present application further provides a charging system of an automatic snow clearing device, comprising the automatic snow clearing device and the wireless charging base according to any one of the above embodiments, wherein the wireless charging base is used for charging the automatic snow clearing device.

### Brief description of the drawings

In order to describe the technical solutions of the present application more clearly, the drawings required for describing the embodiments will be briefly introduced below. Apparently, the drawings in the following description are merely some embodiments of the present application. For those of ordinary skill in the art, other drawings may also be obtained according to these drawings without creative efforts.
Fig. 1 is a schematic structural view of a charging system according to an embodiment of the present application;
Fig. 2 is a schematic structural side view of the wireless charging base in the embodiment of Fig. 1 according to the present application;
Fig. 3 is a schematic exploded structural view of a wireless charging base according to an embodiment of the present application;
Fig. 4 is a schematic bottom view of a wireless charging base according to an embodiment of the present application;
Fig. 5 is a schematic top view of a wireless charging base according to an embodiment of the present application;
Fig. 6 is a schematic structural side view of a wireless charging base according to another embodiment of the present application;
Fig. 7 is a schematic structural side view of a wireless charging base according to another embodiment of the present application;
Fig. 8 is a schematic partial exploded structural view of a wireless charging base from one perspective according to an embodiment of the present application;
Fig. 9 is a schematic structural side view of a charging system according to an embodiment of the present application;
Fig. 10 is a schematic structural view of a part of a support body according to an embodiment of the present application;
Fig. 11 is a schematic partial exploded structural view of a wireless charging base from another perspective according to an embodiment of the present application;
Fig. 12 is a schematic structural view of the bottom of a transition piece according to an embodiment of the present application;
Fig. 13 is a schematic structural view of a part of the bottom of a mounting body according to an embodiment of the present application;
Fig. 14 is a schematic structural view of a cover plate according to an embodiment of the present application;
Fig. 15 is an enlarged schematic structural view of the support block portion at A in Fig. 11;
Fig. 16 is a schematic structural view of the bottom of a mounting body according to an embodiment of the present application; and
Fig. 17 is an enlarged schematic view of part B in Fig. 13.

Reference signs and corresponding meanings are as follows:
1-mounting assembly; 100-wireless charging base; 1000-charging system; 101-charging cavity; 1011-upper end face; 1012-support face; 1013-first side; 1014-second side; 102-first support area; 103-second support area; 104-preset included angle; 105-beacon area; 106-positioning area; 11-mounting body; 111-mounting support part; 1111-mounting pattern; 112-mounting side edge part; 113-first dividing part; 114-second dividing part; 12-support body; 121-first support plate; 1211-protrusion; 122-charging support plate; 123-second support plate; 124-support top plate part; 125-support side edge part; 13-support mounting hole; 14-clamping groove; 15-limiting groove; 16-limiting protrusion; 17-outer-layer protrusion; 18-inner-layer protrusion; 180-reinforcing rib; 150-limiting area; 160-extension area; 2-charging assembly; 200-ground; 21-transmitting coil; 22-charging control member; 221-charging housing; 2211-waterproof joint; 2212-heat dissipation rib; 222-main charging control board; 223-aviation connector; 3-transition piece; 30-upper end face; 31-transition top plate part; 32-transition side edge part; 321-first bevel edge; 322-middle edge; 323-second bevel edge; 33-connecting protrusion; 34-transition reinforcing rib; 35-transition fixing hole; 36-transition pattern; 361-first sub-pattern; 362-second sub-pattern; 4-beacon assembly; 41-first beacon inductance coil; 42-second beacon inductance coil; 43-third beacon inductance coil; 44-cover plate; 441-pressing plate; 5-positioning assembly; 51-first positioning inductance coil; 52-support block; 6-automatic snow clearing device; 60-sensing assembly; 61-crawler track; 7-limiting member.

### Detailed description of disclosed embodiments

In order to facilitate the understanding of this application, the application will be described in more detail with the attached drawings and specific embodiments. Preferred embodiments of the present application are described with the drawings. However, this application may be implemented in many different forms and is not limited to the embodiments described in this specification. On the contrary, these embodiments are provided to make the disclosure of this application more thorough and comprehensive.

It should be noted that, unless otherwise defined, all technical and scientific terms used in this specification have the same meanings as commonly understood by those skilled in the art of this application. The terms used in the specification of this application is only for the purpose of describing specific embodiments, not intended to limit this application. The term "and/or" used in this specification includes any and all combinations of one or more related listed items.

For the description of this application, the labels "front", "rear", "upper", "lower", "left" and "right" shown in the drawings are used to facilitate the understanding of this embodiment, and are not intended to limit this application. The front-back direction indicates the longitudinal direction, the left-right direction indicates the transverse direction, and the up-and-down direction indicates the vertical direction.

When the automatic snow clearing device in the related art is low in power, it needs to return to the wireless charging base for charging. Since the wireless charging base is located outdoors, a large amount of snow usually accumulates thereon. In this case, the automatic snow clearing device needs to clear the snow on the wireless charging base before charging. However, the wireless charging base is flat, and the minimum height thereof is 35 mm. Since the center of gravity of the automatic snow clearing device is located at the front, when the automatic snow clearing device climbs onto the wireless charging base by means of a crawler track for a certain distance, the automatic snow clearing device suddenly drops under the action of gravity, which easily causes the automatic snow clearing device to hit the wireless charging base and accelerates damage to the wireless charging base, and also causes the position of the automatic snow clearing device to deviate, thereby leading to inaccurate positioning and affecting charging. When the automatic snow clearing device hits the wireless charging base, the snow in front of the wireless charging base is difficult to remove completely, and some snow remains. The remaining snow is compacted by the automatic snow clearing device, and the compacted snow forms ice blocks, which raise the plane of the wireless charging base and then raise the automatic snow clearing device, resulting in the automatic snow clearing device being unable to be charged.

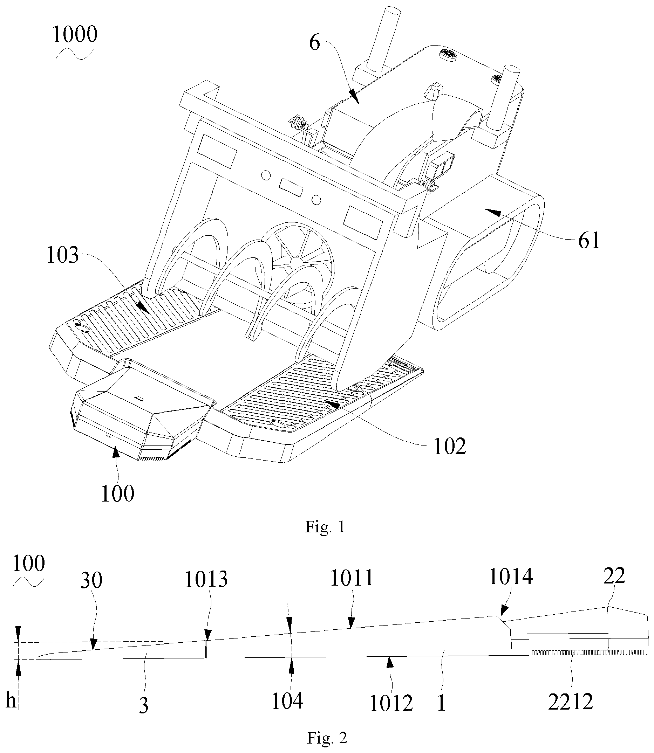

Referring to Fig. 1, some embodiments of the present application provide a charging system 1000 for the automatic snow clearing device 6. The charging system 1000 includes the automatic snow clearing device 6 and a wireless charging base 100, and the wireless charging base 100 is used to charge the automatic snow clearing device 6.

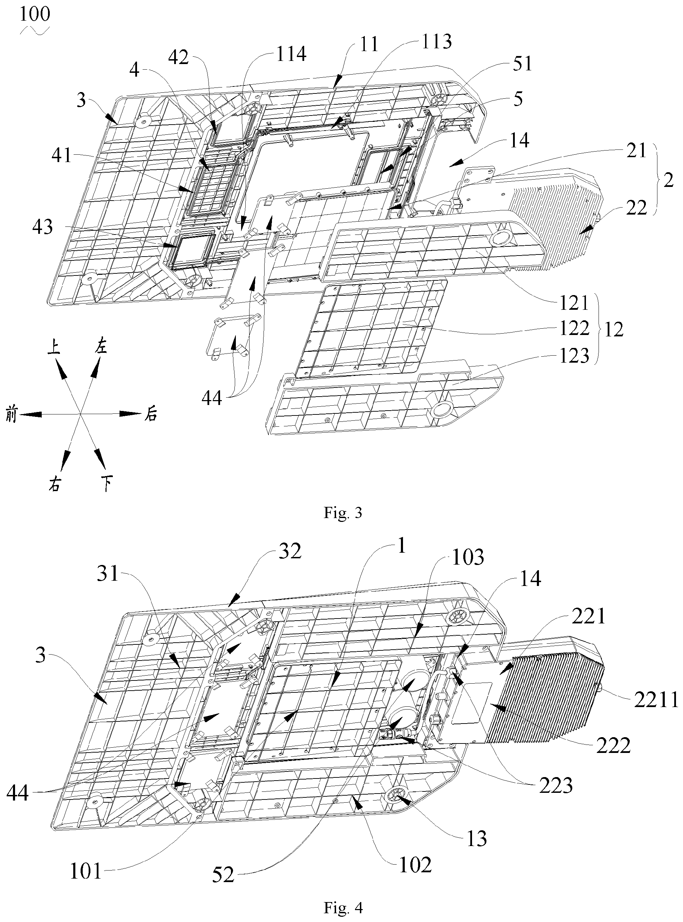

Referring to Fig. 2 and Fig. 3, the wireless charging base 100 includes a mounting assembly 1 and a charging assembly 2, and the charging assembly 2 is arranged on the mounting assembly 1 and is used for charging the automatic snow clearing device 6.

In some embodiments, an upper end face 1011 of the mounting assembly 1 and a support face 1012 of the wireless charging base 100 are oppositely arranged at a preset included angle 104, so as to allow the automatic snow clearing device 6 to move from a low position of the upper end face 1011 of the mounting assembly 1 to a high position thereof. In this way, when the automatic snow clearing device 6 enters the wireless charging base 100 to clear snow, the snow on the wireless charging base 100 can be cleaned from the front end of the wireless charging base 100 (for example, the low position of the upper end face 1011 of the mounting assembly 1), and the automatic snow clearing device 6 then smoothly enters the wireless charging base 100, so that the snow on the whole wireless charging base 100 can be completely cleaned, thereby reducing the likelihood of uncleared snow remaining, reducing the frequency of manual intervention, and improving the intelligence of the overall snow clearing process.

In some embodiments, the upper end face 1011 of the mounting assembly 1 has a first side 1013 and a second side 1014 opposite to each other, and the distance between the upper end face 1011 and the support face 1012 gradually increases from the first side 1013 to the second side 1014, so as to allow the automatic snow clearing device 6 to move from the first side 1013 to the second side 1014. In this way, the automatic snow clearing device 6 is facilitated in clearing snow when entering the wireless charging base 100. The snow on the wireless charging base 100 can be cleaned from the front end of the wireless charging base 100 (for example, the first side 1013 of the upper end face 1011 of the mounting assembly 1), and the automatic snow clearing device 6 then smoothly enters the wireless charging base 100, so that the snow on the whole wireless charging base 100 can be completely cleaned, thereby reducing the likelihood of uncleared snow remaining, reducing the frequency of manual intervention, and improving the intelligence of the overall snow clearing process.

In some embodiments, the minimum height "h" of the upper end face 1011 of the mounting assembly 1 relative to the support face 1012 of the wireless charging base 100 is not greater than 10 mm, so as to allow the automatic snow clearing device 6 to move from the first side 1013 to the second side 1014. In this way, the automatic snow clearing device 6 can smoothly move from the first side 1013 to the second side 1014 without suddenly dropping. This reduces damage to the wireless charging base 100 caused by the automatic snow clearing device 6, and improves the service life of the wireless charging base 100. It also avoids positional deviation of the automatic snow clearing device 6, improves the positioning accuracy of the automatic snow clearing device 6, avoids repeated positioning, and ensures that charging can be performed.

In some embodiments, before the automatic snow clearing device 6 is charged, the front side of the automatic snow clearing device 6 first moves into the mounting assembly 1 from the first side 1013 to the second side 1014 to clean snow on the mounting assembly 1, then exits the mounting assembly 1, and then turns around so that the rear side of the automatic snow clearing device 6 retreats to the mounting assembly 1, such that a charging position of the automatic snow clearing device 6 corresponds to the charging assembly 2 for charging.

The ground is usually used as the support face, which is usually horizontal. The front end of the upper end face 1011 of the mounting assembly 1 is the first side 1013, and the rear end thereof is the second side 1014.

In some embodiments, the preset included angle 104 between the upper end face 1011 of the mounting assembly 1 and the support face 1012 of the wireless charging base 100 is 0°-15°. For example, the preset included angle 104 may be 0°, 1°, 2°, 3°, 4°, 5°, 6°, 7°, 8°, 9°, 10°, 11°, 12°, 13°, 14°, 15°, or any value between any two adjacent angle values thereof.

The preset included angle 104 should be within a suitable angle range. If the angle is too large, the automatic snow clearing device 6 easily slides out of the mounting assembly 1, and the structural size of the mounting assembly 1 itself is also increased. In addition, the mounting assembly 1 itself is required to have relatively high structural strength so as to avoid damage to the mounting assembly 1, which greatly increases the cost of the mounting assembly 1. In some embodiments, when the upper end face 1011 of the mounting assembly 1 is obliquely arranged, the preset included angle 104 between the upper end face 1011 of the mounting assembly 1 and the support face 1012 of the wireless charging base 100 is 3°-8°; for example, the preset included angle 104 may be 5°.

When the preset included angle 104 is greater than 0, the upper end face 1011 of the mounting assembly 1 is an inclined plane with a certain inclination angle. In some embodiments, the height of the mounting side edge part 112 on the front side of the mounting assembly 1 is smaller than that on the rear side, so that the front end of the mounting support part 111 is lower and the rear end thereof is higher. For example, if the preset included angle 104 of the mounting support part 111 is 10°, and the length of a horizontal side of the mounting side edge part 112 is 20 cm, the height of the front side of the mounting side edge part 112 may be 0 cm, 1 cm, or 2 cm, and the corresponding height of the rear side thereof may be 3.5 cm, 4.5 cm, or 5 cm, thereby ensuring that the preset included angle 104 of the mounting support part 111 is always 10°. Whether the preset included angle 104 of the mounting support part 111 is determined first, or the heights of the front side and the rear side of the mounting side edge part 112 are determined first, the preset included angle 104 can be determined accordingly.

In some embodiments, as shown in Fig. 2, the minimum height "h" of the upper end face 1011 of the mounting assembly 1 relative to the support face 1012 of the wireless charging base 100 is not greater than 10 mm. In this case, the upper end face 1011 of the mounting assembly 1 may be a plane, an inclined plane, or an arc surface.

In some embodiments, the distance between the upper end of the first side 1013 and the support face 1012 of the wireless charging base 100 is 0 mm to 9 mm. For example, the distance between the upper end of the first side 1013 and the support face 1012 of the wireless charging base 100 may be 0 mm, 1 mm, 2 mm, 3 mm, 4 mm, 5 mm, 6 mm, 7 mm, 8 mm, 9 mm, or any value between any two adjacent distance values thereof.

When the distance between the upper end of the first side 1013 and the support face 1012 of the wireless charging base 100 is 0 mm, and the preset included angle 104 is 0°, it indicates that the upper end face 1011 is parallel to the support face 1012. When the distance between the upper end of the first side 1013 and the support face 1012 of the wireless charging base 100 is 0 mm, and the preset included angle 104 is greater than 0°, it indicates that the first side 1013 is flush with the support face 1012, and the upper end face 1011 gradually increases in height from front to rear, thereby also enabling the automatic snow clearing device 6 to smoothly enter the mounting assembly 1.When the distance between the upper end of the first side 1013 and the support face 1012 of the wireless charging base 100 is greater than 0 mm and less than 9 mm, and the preset included angle 104 is 0°, it indicates that the upper end face 1011 slightly protrudes from the support face 1012. When the distance between the upper end of the first side 1013 and the support face 1012 of the wireless charging base 100 is greater than 0 mm and less than 9 mm, and the preset included angle 104 is greater than 0°, it indicates that the first side 1013 of the upper end face 1011 slightly protrudes from the support face 1012. The upper end face 1011 gradually increases in height from front to rear, thereby also enabling the automatic snow clearing device 6 to move from a non-preset position of the ground to a preset position without lifting its head.

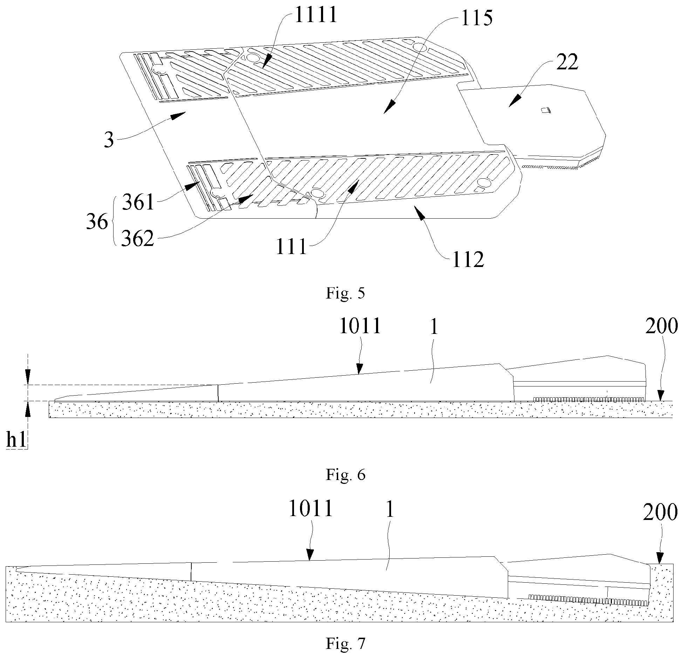

In some embodiments, as shown in Fig. 6, the mounting assembly 1 is embedded and fixed at a preset position of the ground 200, and the minimum height "h1" of the upper end face 1011 of the mounting assembly 1 relative to the ground 200 is not greater than 10 mm. For example, the minimum height "h1" may be 0 mm to 9 mm, so that the automatic snow clearing device 6 is able to move from a non-preset position of the ground 200 to the preset position without lifting its head. In this case, the upper end face 1011 may be a plane, an inclined plane, or an arc surface. Accordingly, the automatic snow clearing device 6 is also able to move from a non-preset position of the ground 200 to the preset position without lifting its head.

In some embodiments, as shown in Fig. 7, the mounting assembly 1 is embedded and fixed at a preset position of the ground 200, and the upper end face 1011 of the mounting assembly 1 is flush with the ground 200, so that the automatic snow clearing device 6 is able to move from a non-preset position of the ground 200 to the preset position without lifting its head. When the upper end face 1011 of the mounting assembly 1 is flush with the ground 200, it may be completely flush therewith, or may have an error of ±2 mm. Accordingly, the automatic snow clearing device 6 is also able to move from a non-preset position of the ground 200 to the preset position without lifting its head.

By setting the preset included angle 104 and the distance between the upper end of the first side 1013 of the mounting assembly 1 and the support face 1012 of the wireless charging base 100, the mounting assembly 1 can not only have an appropriate size, ensure that the mounting assembly 1 has relatively high structural strength, and reduce the cost of the mounting assembly 1, but also facilitate the automatic snow clearing device 6 to enter the mounting assembly 1 for snow clearing and charging.

By defining, in different embodiments, the relationship between the upper end face 1011 of the mounting assembly 1 and the support face 1012, the automatic snow clearing device 6 is able to move from a non-preset position of the ground to the preset position without lifting its head.

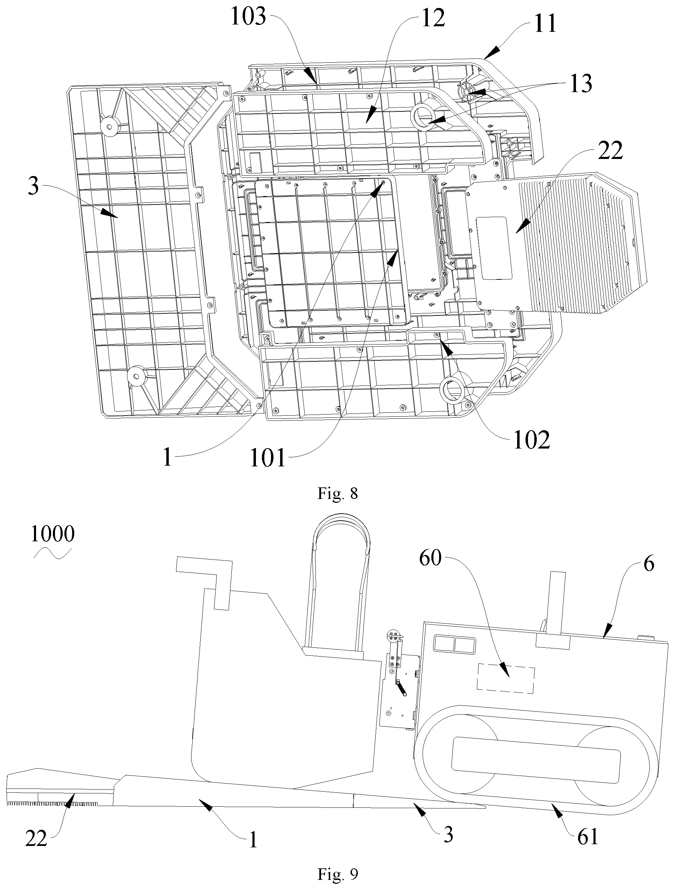

As shown in Fig. 8, the mounting assembly 1 includes a mounting body 11 and a support body 12, and the mounting body 11 and the support body 12 enclose a charging cavity 101.

In some embodiments, the mounting body 11 may be a plate-shaped structure having a frame, and the support body 12 may be a plate-shaped structure, and the support body 12 is covered on the frame of the mounting body 11, thereby forming the charging cavity 101. In other embodiments, the support body 12 may also be a plate-shaped structure having a frame, and the mounting body 11 may be a plate-shaped structure, and the mounting body 11 is covered on the frame of the support body 12, thereby forming the charging cavity 101.

As shown in Fig. 4 and Fig. 5, in some embodiments, the mounting body 11 includes a mounting support part 111 and a mounting side edge part 112. An upper end face of the mounting support part 111 (that is, the upper end face 1011 of the mounting assembly 1) is used to support the automatic snow clearing device 6. The mounting side edge part 112 is located at an edge of the mounting support part 111 and extends downward, and the support body 12 is covered on the mounting side edge part 112. Accordingly, the charging cavity 101 is formed between the support body 12 and the mounting support part 111.

As shown in Fig. 3, Fig. 4, and Fig. 5, the mounting body 11 further includes a first dividing part 113 and a second dividing part 114. The first dividing part 113 and the second dividing part 114 extend downward to divide an area below the mounting body 11 into a first support area 102, a charging cavity 101, and a second support area 103. The support body 12 includes a first support plate 121, a charging support plate 122, and a second support plate 123. The first support plate 121, the charging support plate 122, and the second support plate 123 respectively correspond to and cover the first support area 102, the charging cavity 101, and the second support area 103.

In some embodiments, the first dividing part 113 and the second dividing part 114 may be arranged horizontally or vertically.

Referring to Fig. 9, in some embodiments, the first dividing part 113 and the second dividing part 114 are vertically arranged on the lower end face of the mounting support part 111, and two ends of the first dividing part 113 and the second dividing part 114 abut against the mounting side edge parts 112 at two sides. The first dividing part 113 and the second dividing part 114 are vertically arranged so that the first support area 102 and the second support area 103 respectively correspond to the crawler tracks 61 on two sides of the automatic snow clearing device 6. When the automatic snow clearing device 6 enters the mounting assembly 1, the crawler tracks 61 on the two sides of the automatic snow clearing device 6 correspondingly move directly above the first support area 102 and the second support area 103, and the crawler tracks 61 on the two sides of the automatic snow clearing device 6 are respectively supported by the first support plate 121 and the second support plate 123. In this way, the structural strength of contact positions between the automatic snow clearing device 6 and the mounting assembly 1 can be improved, which can not only ensure a good supporting effect on the automatic snow clearing device 6, but also avoid excessive waste of material at positions not in contact with the automatic snow clearing device 6.

In some embodiments, the widths of the first support area 102 and the second support area 103 match the width of the crawler track 61 of the automatic snow clearing device 6.

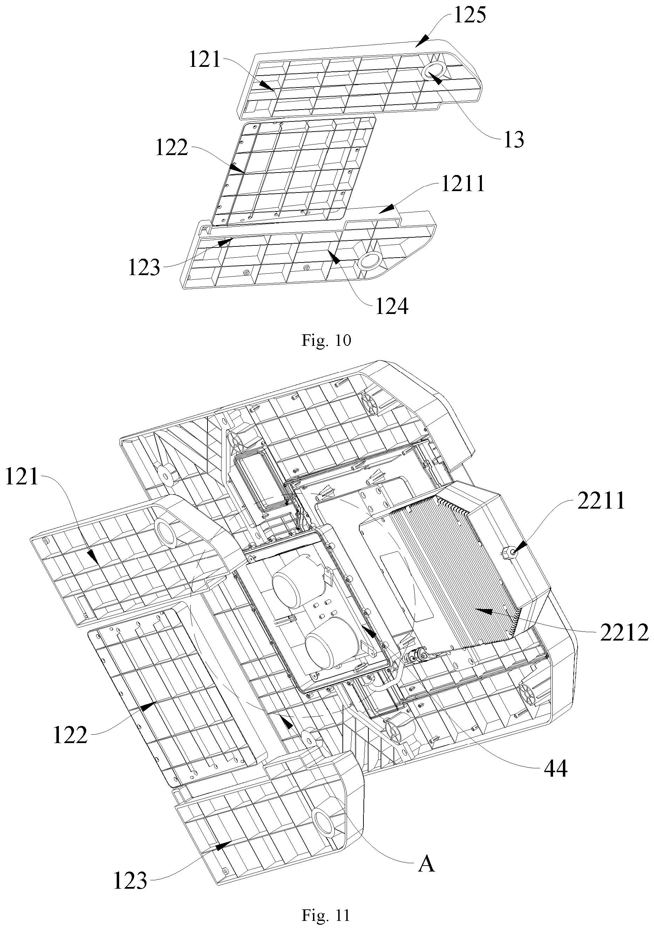

Referring to Fig. 10, in some embodiments, the first support plate 121 and the second support plate 123 are structurally different, and the first support plate 121 or the second support plate 123 is provided with an inwardly extending protrusion 1211. The protrusion 1211 can avoid installation errors between the first support plate 121 and the second support plate 123. For example, the first support plate 121 is prevented from being installed at the second support area 103, and the second support plate 123 is prevented from being installed at the first support area 102.

The first support plate 121, the charging support plate 122, and the second support plate 123 each include a support top plate part 124 and a support side edge part 125. The support top plate part 124 is adjacent to the mounting body 11, and the support side edge part 125 is arranged at an edge of the support top plate part 124 and extends in a direction away from the mounting body 11.

The height of the front support side edge part 125 is smaller than that of the rear support side edge part 125, so that an inclination angle of the support top plate part 124 is the same as the preset angle of the upper end face of the mounting body 11. In this way, material consumption of the support body 12 can be reduced to save cost, the structure of the mounting assembly 1 can be made more compact, and the structural strength of the mounting assembly 1 can also be improved.

As shown in Fig. 8, in some embodiments, the mounting assembly 1 is provided with a support mounting hole 13, and the support mounting hole 13 extends through the mounting body 11 and the support body 12. The mounting assembly 1 can be fixed on the ground by inserting a bolt through the support mounting hole 13.

As shown in Fig. 5, in some embodiments, a mounting pattern 1111 is arranged on the upper end face of the mounting support part 111, and the position of the mounting pattern 1111 corresponds to the crawler tracks 61 on two sides of the automatic snow clearing device 6. The mounting pattern 1111 is used to improve friction between the crawler tracks 61 of the automatic snow clearing device 6 and the mounting assembly 1, so as to avoid the automatic snow clearing device 6 slipping off the wireless charging base 100, and also avoid the automatic snow clearing device 6 slipping on the wireless charging base 100 and scratching the wireless charging base 100, thereby prolonging the service life of the wireless charging base 100.

The mounting patterns 1111 are obliquely arranged, and upper ends of the mounting patterns 1111 on the left and right sides are both arranged near a middle part of the mounting support part 111, while lower ends thereof extend in directions away from the middle part of the mounting support part 111.

The charging assembly 2 may be of a wired charging type or a wireless charging type. However, in wired charging, components of contact points that are in contact with the automatic snow clearing device 6 are inevitably exposed to the air, resulting in relatively poor safety. In addition, after coming into contact with water, corrosion thereof is accelerated, thereby easily reducing the service life.

Therefore, in some embodiments, wireless charging is used to charge the automatic snow clearing device 6. As shown in Fig. 3 and Fig. 4, the charging assembly 2 includes a charging transmitting coil 21 and a charging control member 22, and the charging control member 22 is connected with the charging transmitting coil 21. The charging control member 22 is used to control operation of the charging transmitting coil 21, and the charging transmitting coil 21 is arranged in the charging cavity 101 of the mounting assembly 1. The charging control member 22 includes a charging housing 221 and a main charging control board 222. The charging housing 221 is connected with the mounting assembly 1, the main charging control board 222 is arranged in the charging housing 221, and the main charging control board 222 is connected with the charging transmitting coil 21.

In the embodiments of the present application, the automatic snow clearing device 6 is charged in a wireless charging mode. The charging transmitting coil 21 for charging is arranged in the mounting assembly 1, while the charging control member 22 for controlling the charging transmitting coil 21 is separately arranged, thereby reducing the space occupied by the charging control member 22 in the mounting assembly 1, making the structure of the mounting assembly 1 compact, and correspondingly improving the structural strength of the mounting assembly 1. The charging transmitting coil 21 is separately arranged in the mounting assembly 1, so that waterproof treatment can be separately provided for the charging transmitting coil 21, thereby improving waterproof performance of the charging transmitting coil 21. Since the charging control member 22 is also separately arranged, the difficulty in waterproof treatment of the charging control member 22 is also reduced. This is also beneficial to heat dissipation of the main charging control board 222.

The charging transmitting coil 21 and the charging control member 22 are separately arranged. During installation, the charging transmitting coil 21 is installed in the charging cavity 101 of the mounting assembly 1, and the charging control member 22 is detachably fixed at the rear of the mounting assembly 1 by means of screws, buckles, or the like. The charging transmitting coil 21 is then electrically connected with the main charging control board 222 through a connecting wire.

An inner end of the connecting wire is connected with the main charging control board 222, and an outer end of the connecting wire is provided with an aviation connector 223, so that the connecting wire is connected with the charging transmitting coil 21 through the aviation connector 223. In this way, disassembly, assembly, and maintenance of the charging control member 22 can be facilitated, and installation efficiency of the wireless charging base 100 can be improved.

As shown in Fig. 4, in some embodiments, both ends of the connecting wire are provided with aviation connectors 223, and the connecting wire is electrically connected with the charging transmitting coil 21 and the main charging control board 222 respectively through the aviation connectors 223 at the two ends. In this way, disassembly, assembly, and maintenance of the charging control member 22 can be facilitated, and installation efficiency of the wireless charging base 100 can be improved.

In some embodiments, the rear portion of the mounting assembly 1 is provided with a groove 14, and the front portion of the charging control member 22 is clamped in the groove 14, so that the charging control member 22 can be conveniently fixed.

In some embodiments, the length of the portion of the charging housing 221 clamped in the groove 14 is 1/6 to 1/2 of the overall length of the charging housing 221, so that the charging housing 221 can be conveniently fixed, and the space occupied by the charging housing 221 in the mounting assembly 1 can be reduced, thereby avoiding unnecessary interference with positioning and charging.

In some embodiments, the charging housing 221 is located at the lower part of the rear end of the mounting assembly 1, and the upper end face of the charging housing 221 is lower than the upper end face 1011 of the mounting assembly 1. The charging housing 221 can support the mounting assembly 1 and further improve the structural strength of the mounting assembly 1.

Referring to FIG. 11, in some embodiments, the rear end of the charging housing 221 is provided with a waterproof joint 2211, which is configured to connect a charging cable, and the automatic snow clearing device 6 is charged by connecting the charging cable to a commercial power supply. The waterproof joint 2211 may be a cable gland.

In some embodiments, the lower end face of the charging housing 221 is provided with heat dissipation ribs 2212, which are used to improve the heat dissipation performance of the charging housing 221.

In some embodiments, the heat dissipation ribs 2212 are a plurality of transverse ribs arranged at uniform intervals. Therefore, a good heat dissipation effect can be achieved.

In some embodiments, the area of the heat dissipation ribs 2212 accounts for 1/2 to 3/4 of the entire bottom surface area of the charging housing 221; that is, 1/2 to 3/4 of the bottom surface of the charging housing 221 is provided with the heat dissipation ribs 2212. This can ensure that the charging housing 221 has a good heat dissipation effect.

In some embodiments, the charging assembly 2 is disposed in the charging cavity 101 of the mounting body 11. When the mounting body 11 is of an integral structure, it occupies a relatively large space and is inconvenient for transportation. In addition, the front side portion is often crushed by the automatic snow clearing device 6 and is therefore prone to damage, resulting in a relatively short service life and a relatively high replacement cost.

When the automatic operating equipment or the automatic snow clearing device in the related art is low in power, it needs to return to the wireless charging base for charging. Because the automatic operating equipment or the automatic snow clearing device has a relatively large self-weight, the wireless charging base is subjected to a certain degree of crushing. During charging, it is necessary to align with the charging position and repeatedly adjust the position of the automatic operating equipment or the automatic snow clearing device. Therefore, the inlet end of the wireless charging base is more likely to be crushed and damaged. If the entire housing of the wireless charging base is replaced after being damaged, replacement is relatively cumbersome and maintenance is inconvenient, which also increases consumable costs and wastes resources. Moreover, when the housing of the wireless charging base is provided as an integral structure, it occupies a relatively large space and is inconvenient for storage and transportation.

As shown in FIG. 8, in some embodiments, the wireless charging base 100 further includes a transition piece 3, which is arranged on the front side of the mounting assembly 1 and is detachably connected to the mounting assembly 1.

The transition piece 3 is arranged on the front side of the mounting assembly 1. When the automatic snow clearing device 6 enters the mounting assembly 1 for charging, it first enters the transition piece 3. In this way, the direct impact on the mounting assembly 1 when the automatic snow clearing device 6 directly enters the mounting assembly 1 can be avoided, damage by the automatic snow clearing device 6 to the mounting assembly 1 can be reduced, and the service life of the mounting assembly 1 can be prolonged. After the transition piece 3 is damaged, it can be directly detached and replaced without replacing the mounting assembly 1, thereby saving costs and reducing waste of resources. After the transition piece 3 and the mounting assembly 1 are detached from each other, the occupied space is also reduced, which facilitates storage and transportation and improves the convenience of storage and transportation.

The transition piece 3 can be detachably connected to the mounting assembly 1 by means of snap-fitting, bonding, or the like.

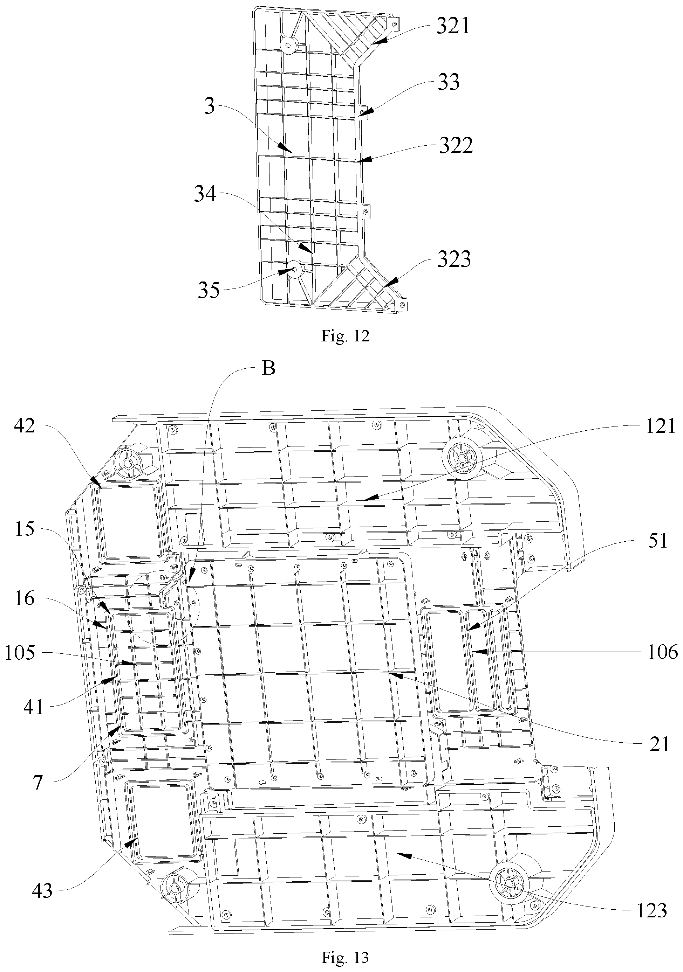

Referring to FIGS. 4 and 12, the transition piece 3 includes a transition top plate portion 31 and transition side edge parts 32. The transition top plate portion 31 is used for supporting the automatic snow clearing device 6, and the transition side edge parts 32 are arranged on the transition top plate portion 31 and extend downward.

The height of the front transition side edge part 32 is smaller than that of the rear transition side edge part 32, so that the inclination angle of the transition top plate portion 31 is the same as the preset angle of the upper end face of the mounting body 11.

The inclination angle of the upper end face 30 of the transition piece 3 (see FIG. 2) is the same as that of the upper end face 1011 of the mounting assembly 1. In other words, the lower end face of the transition piece 3 and the lower end face of the mounting assembly 1 jointly form the lower end face of the wireless charging base 100; the upper end face of the transition piece 3 forms an inclination angle α with the lower end face of the wireless charging base 100, and the upper end face of the mounting assembly 1 forms an inclination angle β with the lower end face of the wireless charging base 100, and the inclination angle and opening direction of α are the same as those of β. In this way, the automatic snow clearing device 6 can smoothly enter the mounting assembly 1 from the transition piece 3.

When the transition piece 3 is provided, the height of the rear transition side edge part 32 is equal to the height of the front mounting side edge part 112 of the mounting assembly 1. In this way, the automatic snow clearing device 6 can smoothly enter the mounting assembly 1 from the transition piece 3.

That is, when the preset included angle 104 between the support body 12 and the mounting body 11 is 2° to 15°, the inclination angle of the upper end face 30 of the transition piece 3 is correspondingly 2° to 15°. In this way, the upper end face of the mounting assembly 1 and the upper end face 30 of the transition piece 3 can form a smooth straight line, so that the automatic snow clearing device 6 can smoothly enter the mounting assembly 1 from the transition piece 3.

The shape of the rear end edge of the transition piece 3 is adapted to the shape of the front end edge of the mounting assembly 1. In this way, the closeness of contact between the transition piece 3 and the mounting assembly 1 can be improved.

A plurality of connecting protrusions 33 extend from the rear end of the transition piece 3 toward the mounting assembly 1, or extend from the front end of the mounting assembly 1 toward the transition piece 3. In other words, a plurality of connecting protrusions 33 extend from the rear end of the transition piece 3 in a direction toward the mounting assembly 1, or a plurality of connecting protrusions 33 extend from the front end of the mounting assembly 1 in a direction toward the transition piece 3. The connecting protrusions 33 are used for fixedly connecting the transition piece 3 and the mounting assembly 1. The transition piece 3 and the mounting assembly 1 can be fixedly connected by bolts penetrating the connecting protrusions 33.

The rear end edge of the transition piece 3 includes a first bevel edge 321, a middle edge 322, and a second bevel edge 323 that extend in sequence, and together define an open U-shape. The rear end of the first bevel edge 321 is connected to the left end of the middle edge 322, the middle edge 322 extends horizontally to the right end thereof, and the right end of the middle edge 322 is connected to the rear end of the second bevel edge 323. The first bevel edge 321 extends from back to front, and the second bevel edge 323 extends from front to back.

A transition reinforcing rib 34 is provided at the bottom of the transition piece 3, and the transition reinforcing rib 34 is used to improve the strength of the transition piece 3.

The transition reinforcing rib 34 at the first bevel edge 321 is perpendicular to the first bevel edge 321, and the transition reinforcing rib 34 at the second bevel edge 323 is perpendicular to the second bevel edge 323, thereby ensuring the structural strength at the first bevel edge 321 and the second bevel edge 323.

The connecting protrusions 33 extend from the front end of the first bevel edge 321, the left and right sides of the middle edge 322, and the front end of the second bevel edge 323. The transition piece 3 and the mounting assembly 1 can be fixedly connected by bolts penetrating the connecting protrusions 33.

The front portion of the transition piece 3 is provided with a transition fixing hole 35, and a bolt can be inserted into the transition fixing hole 35 to fix the transition piece 3 to the ground.

As shown in FIG. 5, the upper end face 30 of the transition piece 3 is provided with a transition pattern 36, which is used to increase the friction between the transition piece 3 and the automatic snow clearing device 6.

The transition pattern 36 includes a first sub-pattern 361, which is transversely arranged at the front portion of the upper end face 30 of the transition piece 3. The first sub-pattern 361 can greatly increase the friction between the automatic snow clearing device 6 and the transition piece 3, thereby facilitating the automatic snow clearing device 6 to smoothly enter the transition piece 3.

The transition pattern 36 further includes a second sub-pattern 362, which is obliquely arranged at the rear portion of the upper end face 30 of the transition piece 3. The second sub-pattern 362 is adapted to the corresponding mounting pattern 1111, thereby facilitating the automatic snow clearing device 6 to smoothly enter the mounting assembly 1 from the transition piece 3.

As shown in FIG. 3, the wireless charging base 100 further includes a beacon assembly 4 and a positioning assembly 5. Alternatively, the wireless charging base 100 includes an inductive mechanism, and the inductive mechanism includes a beacon assembly 4 and a positioning assembly 5. The beacon assembly 4 is arranged at the front portion of the mounting assembly 1, and the positioning assembly 5 is arranged at the rear portion of the mounting assembly 1. The beacon assembly 4 and the positioning assembly 5 correspond to the sensing assembly 60 on the automatic snow clearing device 6. The sensing assembly 60 is used to sense the positions of the beacon assembly 4 and the positioning assembly 5 and to guide the automatic snow clearing device 6 to move to the charging position according to the position of the beacon assembly 4. At the charging position, the sensing assembly 60 corresponds to the positioning assembly 5, and the automatic snow clearing device 6 is charged through the charging assembly 2.

When the automatic snow clearing device 6 retreats into the mounting assembly 1 for charging, the sensing assembly 60 adjusts the position of the automatic snow clearing device 6 according to the position of the beacon assembly 4, so that the position of the sensing assembly 60 is on the same straight line as the positions of the beacon assembly 4 and the positioning assembly 5. Then, the automatic snow clearing device 6 moves straight backward until the position of the sensing assembly 60 corresponds to the position of the positioning assembly 5. After the sensing assembly 60 senses the positioning assembly 5, it indicates that the automatic snow clearing device 6 has moved to the charging position, where the automatic snow clearing device 6 can be charged by the charging assembly 2.

If the position of the sensing assembly 60 is not on the same straight line as the positions of the beacon assembly 4 and the positioning assembly 5, it indicates that the position of the automatic snow clearing device 6 is inaccurate. Adjustment can be performed on the outer side of the mounting assembly 1, without entering the mounting assembly 1 and then driving out for adjustment, thereby avoiding repeated entry of the crawler track 61 of the automatic snow clearing device 6 into the mounting assembly 1 and improving the service life of the mounting assembly 1.

Referring to FIG. 13, in some embodiments, the front side of the mounting body 11 includes a beacon area 105, which is used for arranging the beacon assembly 4, and the rear side of the mounting body 11 includes a positioning area 106, which is used for arranging the positioning assembly 5.

In some embodiments, the sensing assembly 60 may be an ultrasonic sensor, an infrared sensor, or the like, and the beacon assembly 4 and the positioning assembly 5 may be protruding points or the like arranged on the end face of the mounting assembly 1. The positions of the protruding points are sensed by the ultrasonic sensor or the infrared sensor, so as to determine whether the position of the sensing assembly 60 is on the same straight line as the positions of the beacon assembly 4 and the positioning assembly 5.

In some embodiments, the sensing assembly 60 is a magnetic induction element, and the beacon assembly 4 and the positioning assembly 5 are inductance coils. After the inductance coils are energized, a magnetic field is generated, and the magnetic induction element on the automatic snow clearing device 6 detects the magnetic field generated by the inductance coils, so that the position of the automatic snow clearing device 6 is determined by the magnetic field.

In some embodiments, the wireless charging base 100 may further include a limiting member 7, which is arranged on the end face of the mounting assembly 1 adjacent to the ground. The limiting member 7 is used for limiting the position of an inductance coil and fixing the inductance coil, and the inductance coil is arranged at the limiting member 7. The inductance coil is used to guide the automatic operating equipment to move to the charging position, where the automatic operating equipment is charged through the charging assembly 2. The automatic operating equipment may be the automatic snow clearing device 6. In some embodiments, executable functions of the automatic operating equipment include one or more of snow clearing, mowing, salt spreading, and fallen leaf clearing.

In one embodiment of the present application, the limiting member 7 is arranged on the end face of the mounting assembly 1 adjacent to the ground. After the position of the limiting member 7 is determined, the inductance coil can be correspondingly arranged on the limiting member 7. Through the limiting member 7, the position of the inductance mechanism (for example, the inductance coil) can be accurately determined, so that the installation efficiency of the inductance coil is improved, the fixing effect of the inductance mechanism is improved, and the inductance mechanism is prevented from loosening and/or slipping from the wireless charging base 100, thereby enabling the wireless charging base 100 to stably charge the automatic operating equipment.

In some embodiments, the limiting member 7 may be a buckle adapted to the inductance coil. The buckle may be arranged at intervals on the end face of the mounting assembly 1 adjacent to the ground, and the inductance coil may then be clamped on the buckle.

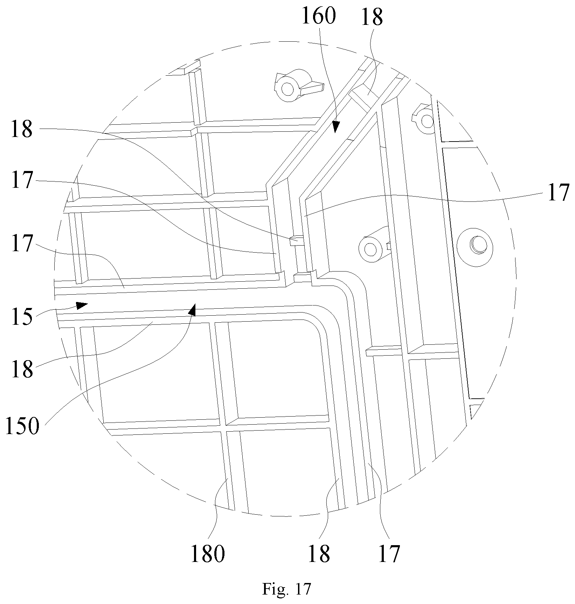

Referring to FIGS. 13 and 17, in some embodiments, the limiting member 7 includes a limiting groove 15, which is arranged on the end face of the mounting assembly 1 adjacent to the ground, and the inductance coil is clamped in the limiting groove 15. The limiting groove 15 is adapted to the inductance coil, the inductance coil is correspondingly clamped in the limiting groove 15, and the inductance coil is fixed and limited by the limiting groove 15.

In some embodiments, the limiting groove 15 may be a groove formed in the mounting assembly 1. In other embodiments, a limiting protrusion 16 extends from the lower end face of the mounting assembly 1, and the limiting groove 15 is formed in the limiting protrusion 16. The structural strength of the mounting assembly 1 can be improved by the limiting protrusion 16. The limiting protrusion 16 is filled with sealant, which is used to seal the charging transmitting coil 21, thereby improving the waterproof capability of the charging transmitting coil 21.

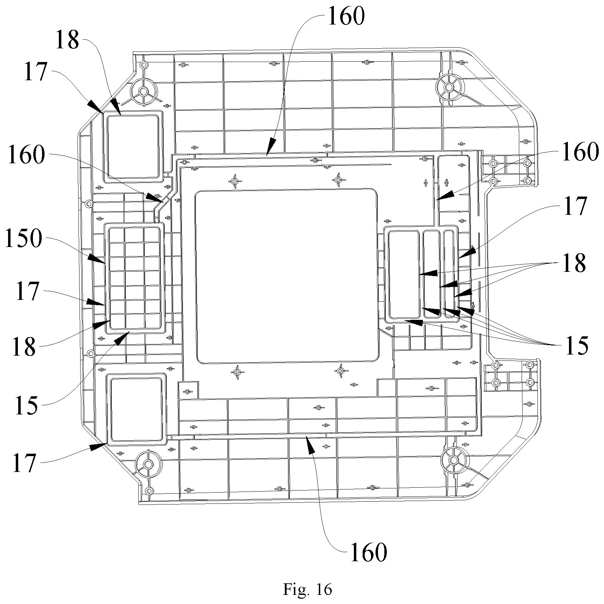

Referring to FIG. 16, in some embodiments, the limiting member 7 includes an outer protrusion 17 and an inner protrusion 18 which are arranged at intervals in the transverse direction. The outer protrusion 17 and the inner protrusion 18 are arranged on the end face of the mounting assembly 1 adjacent to the ground and extend away from the mounting assembly 1. The outer protrusion 17 and the inner protrusion 18 enclose to form the limiting groove 15. In this way, it can be ensured that the mounting assembly 1 has relatively high structural strength.

In some embodiments, as shown in FIGS. 13, 16, and 17, a plurality of inner protrusions 18 are arranged within the outer protrusion 17 in the positioning area 106. The spaces enclosed between the outer protrusion 17 and the inner protrusions 18 and the spaces between adjacent inner protrusions 18 together form a plurality of limiting grooves 15. The plurality of limiting grooves 15 are used for defining different positions of the inductance coil within the same outer protrusion 17. The inductance coil may surround the periphery of one inner protrusion 18 or a plurality of inner protrusions 18. In this way, inductance coils having different shapes, sizes, and positions can be flexibly arranged according to the inner protrusions 18 at different positions.

In some embodiments, as shown in FIG. 16, an area enclosed by the outer protrusion 17 and the inner protrusion 18 includes a limiting area 150 and an extension area 160, and the extension area 160 extends outward from an edge of the limiting area 150. The limiting area 150 is used to limit a coverage area of the inductance coil, and the extension area 160 is used to guide the inductance coil to the limiting area 150. The inductance coil is arranged in the limiting area 150 while being surrounded by the extension area 160, and then returns to the extension area 160. In this way, the structure of the mounting assembly 1 can be made compact, and the mounting assembly 1 can be ensured to have relatively high structural strength. The extension area 160 corresponding to the beacon assembly 4 and the extension area 160 corresponding to the positioning assembly 5 are aggregated, thereby further improving the compactness of the structure of the mounting assembly 1.

The heights of the outer protrusion 17 and the inner protrusion 18 in the extension area 160 are greater than the heights of the outer protrusion 17 and the inner protrusion 18 in the limiting area 150. In this way, exposure of the inductance coil in the extension area 160 can be prevented. The limiting area 150 is rectangular, and the extension area 160 is strip-shaped. A reinforcing rib 180 is arranged in the area enclosed by the inner protrusion 18. In this way, the structural strength of the mounting assembly 1 can be improved.

Referring to FIGS. 3 and 9, in some embodiments, the sensing assembly 60 includes a first magnetic induction element, the beacon assembly 4 includes a first beacon inductance coil 41, and the positioning assembly 5 includes a first positioning inductance coil 51. The first magnetic induction element first senses the positions of the first beacon inductance coil 41 and the first positioning inductance coil 51 so as to move to the charging position.

In some embodiments, the sensing assembly 60 includes a first magnetic induction element and a second magnetic induction element, which are transversely arranged side by side. The beacon assembly 4 includes a first beacon inductance coil 41, and the positioning assembly 5 includes a first positioning inductance coil 51. After both the first magnetic induction element and the second magnetic induction element sense the first beacon inductance coil 41, the automatic snow clearing device 6 moves backward toward the first positioning inductance coil 51. After both the first magnetic induction element and the second magnetic induction element sense the first positioning inductance coil 51, it indicates that the automatic snow clearing device 6 has moved to the charging position, and the charging assembly 2 can be started to charge the automatic snow clearing device 6.

When both the first magnetic induction element and the second magnetic induction element sense the first beacon inductance coil 41, it indicates that the first magnetic induction element and the second magnetic induction element are adjacent to the first beacon inductance coil 41. At this point, the automatic snow clearing device 6 is also directly facing the wireless charging base 100 rather than being skewed. This avoids a situation in which, when only a single magnetic induction element is provided and the beacon assembly 4 and the positioning assembly 5 are inductance coils, the automatic snow clearing device 6 may become skewed and cannot efficiently reach the charging position. In this way, positioning accuracy is improved, the positioning time of the automatic snow clearing device 6 is reduced, and positioning efficiency is improved.

After both the first magnetic induction element and the second magnetic induction element sense the first beacon inductance coil 41, the automatic snow clearing device 6 moves straight backward. When both the first magnetic induction element and the second magnetic induction element sense the first positioning inductance coil 51, it indicates that the automatic snow clearing device 6 has moved to the charging position, where the automatic snow clearing device 6 can be charged through the charging assembly 2.

The first beacon inductance coil 41 and the first positioning inductance coil 51 may be provided in different shapes, such as rectangular, circular, or polygonal shapes, or may be arranged side by side.

The first beacon inductance coil 41 and the first positioning inductance coil 51 are rectangular and are arranged side by side in the mounting assembly 1.

The lengths of the first beacon inductance coil 41 and the first positioning inductance coil 51 are greater than or equal to the distance between the first magnetic induction element and the second magnetic induction element. In this way, both the first magnetic induction element and the second magnetic induction element can sense the first beacon inductance coil 41 and the first positioning inductance coil 51. The distance between the first magnetic induction element and the second magnetic induction element is the distance between the center of the first magnetic induction element and the center of the second magnetic induction element.

The beacon assembly 4 further includes a second beacon inductance coil 42 and a third beacon inductance coil 43. The second beacon inductance coil 42 and the third beacon inductance coil 43 are used to correct the position of the automatic snow clearing device 6. The second beacon inductance coil 42 and the third beacon inductance coil 43 are respectively located on two sides of the first positioning inductance coil 51, and the second beacon inductance coil 42 and the third beacon inductance coil 43 are arranged side by side with the first positioning inductance coil 51.

The magnetic field intensities of the first beacon inductance coil 41, the second beacon inductance coil 42, and the third beacon inductance coil 43 are different. In this way, the first magnetic induction element and the second magnetic induction element can determine which inductance coil is being sensed, thereby enabling the position of the automatic snow clearing device 6 to be adjusted more quickly. For example, the first magnetic induction element is located on the left side of the automatic snow clearing device 6, and the second magnetic induction element is located on the right side of the automatic snow clearing device 6. The second beacon inductance coil 42, the first beacon inductance coil 41, and the third beacon inductance coil 43 are arranged sequentially from left to right. When only the second magnetic induction element senses the second beacon inductance coil 42, it indicates that the position of the automatic snow clearing device 6 is inclined to the left and needs to be adjusted to the right. When the first magnetic induction element senses the second beacon inductance coil 42 and the second magnetic induction element senses the first beacon inductance coil 41, it also indicates that the position of the automatic snow clearing device 6 is inclined to the left and needs to be adjusted to the right. When both the first magnetic induction element and the second magnetic induction element sense the first beacon inductance coil 41, it indicates that the automatic snow clearing device 6 is directly facing the wireless charging base 100, and the automatic snow clearing device 6 only needs to move backward to the charging position. When the first magnetic induction element senses the first beacon inductance coil 41 and the second magnetic induction element senses the third beacon inductance coil 43, it indicates that the position of the automatic snow clearing device 6 is inclined to the right and needs to be adjusted to the left. When only the first magnetic induction element senses the third beacon inductance coil 43, it also indicates that the position of the automatic snow clearing device 6 is inclined to the right and needs to be adjusted to the left. In this way, the position of the automatic snow clearing device 6 can be efficiently adjusted according to which inductance coil is sensed by the first magnetic induction element and the second magnetic induction element. Positioning accuracy is thereby improved, the positioning time of the automatic snow clearing device 6 is reduced, and positioning efficiency is improved.

The second beacon inductance coil 42 and the third beacon inductance coil 43 are rectangular, and the lengths of the second beacon inductance coil 42 and the third beacon inductance coil 43 are greater than or equal to the respective sizes of the first magnetic induction element and the second magnetic induction element. The purpose of the second beacon inductance coil 42 and the third beacon inductance coil 43 is to enable the first magnetic induction element and the second magnetic induction element to sense positions in advance, without requiring both the first magnetic induction element and the second magnetic induction element to be covered at the same time, thereby reducing waste of materials.

Referring to FIG. 13, the lower end face of the mounting assembly 1 is provided with limiting protrusions 16 respectively adapted to the first beacon inductance coil 41, the second beacon inductance coil 42, the third beacon inductance coil 43, and the first positioning inductance coil 51. The limiting protrusions 16 are provided with limiting grooves 15, and the first beacon inductance coil 41, the second beacon inductance coil 42, the third beacon inductance coil 43, and the first positioning inductance coil 51 are respectively and correspondingly clamped in the limiting grooves 15. Through the limiting protrusions 16, the first beacon inductance coil 41, the second beacon inductance coil 42, the third beacon inductance coil 43, and the first positioning inductance coil 51 can be limited and fixed, so as to prevent the first beacon inductance coil 41, the second beacon inductance coil 42, the third beacon inductance coil 43, and the first positioning inductance coil 51 from slipping out.

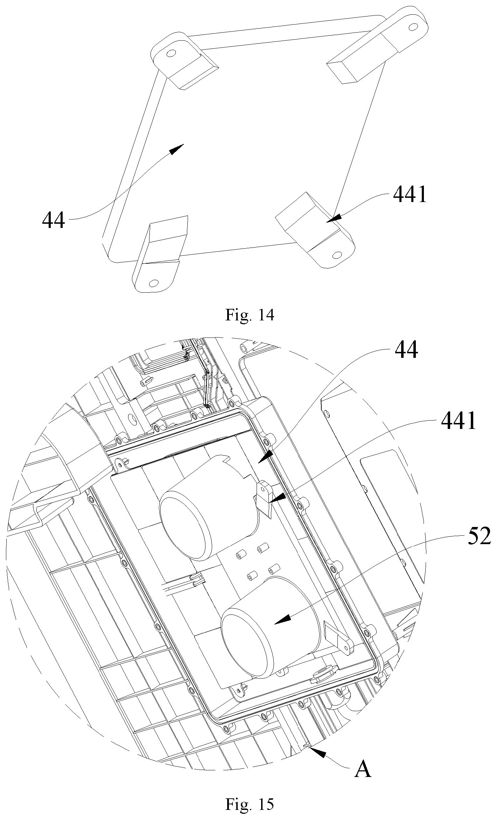

Referring to FIGS. 3 and 14, the lower part of the mounting assembly 1 is provided with a cover plate 44. The cover plate 44 covers the peripheries of the first beacon inductance coil 41, the second beacon inductance coil 42, the third beacon inductance coil 43, and the first positioning inductance coil 51.

On the lower side of the mounting assembly 1 at the four corners of the cover plate 44, pressing plates 441 are provided. The pressing plates 441 are rotatably connected to the mounting assembly 1 through rotating shafts. The pressing plates 441 can rotate relative to the mounting assembly 1, and when the pressing plates 441 rotate onto the cover plate 44, they fixedly support the cover plate 44. In this way, maintenance of the first beacon inductance coil 41, the second beacon inductance coil 42, the third beacon inductance coil 43, and the first positioning inductance coil 51 is facilitated.

The first positioning inductance coil 51 is aligned with the first beacon inductance coil 41. When the first magnetic induction element and the second magnetic induction element are within the coverage range of the first beacon inductance coil 41, the automatic snow clearing device 6 moves straight backward so as to correspond to the first positioning inductance coil 51. When both the first magnetic induction element and the second magnetic induction element detect the first positioning inductance coil 51, it indicates that the charging transmitting coil 21 on the wireless charging base 100 is coupled with the charging receiving coil on the automatic snow clearing device 6. After the charging transmitting coil 21 is coupled with the charging receiving coil on the automatic snow clearing device 6, the automatic snow clearing device 6 is stopped, and the automatic snow clearing device 6 can be charged through the charging transmitting coil 21 and the charging receiving coil on the automatic snow clearing device 6.

Referring to FIG. 15, a support block 52 is arranged on the cover plate 44 at the position of the first positioning inductance coil 51, and the support block 52 is used for supporting the mounting assembly 1, thereby improving the compressive strength of the mounting assembly 1. The support block 52 is cylindrical, and the lower end face of the support block 52 is in contact with the ground, so that the supporting force at the first positioning inductance coil 51 is improved through the support block 52, damage to the mounting assembly 1 is avoided, and the service life of the mounting assembly 1 is prolonged.

The above are merely embodiments, which do not limit the patent scope of this application. Any equivalent structural transformation made with the contents of this application specification and attached drawings, or directly or indirectly applied to other related technical fields, are included in the patent protection scope of this application.

## Claims

1. A wireless charging base, **characterized in that** the wireless charging base is used for charging an automatic snow clearing device and comprises a mounting assembly and a charging assembly, wherein the charging assembly is arranged on the mounting assembly and used for charging the automatic snow clearing device;
an upper end face of the mounting assembly and a support face of the wireless charging base are oppositely arranged at a preset included angle, so as to allow the automatic snow clearing device to move from a lower position to a higher position on the upper end face; or
the upper end face of the mounting assembly has a first side and a second side opposite to each other; a distance between the upper end face and the support face of the wireless charging base gradually increases from the first side to the second side, so as to allow the automatic snow clearing device to move from the first side to the second side.

2. The wireless charging base of claim 1, wherein a minimum height of the upper end face of the mounting assembly relative to the support face of the wireless charging base is less than 10 mm.

3. The wireless charging base of claim 1, wherein the preset included angle between the upper end face of the mounting assembly and the support face of the wireless charging base is 0°-15°.

4. The wireless charging base of claim 3, wherein the preset included angle between the upper end face of the mounting assembly and the support face of the wireless charging base is 3°-8°.

5. The wireless charging base of any one of claims 1-4, wherein the wireless charging base further comprises a transition piece, and the transition piece is detachably connected with the mounting assembly;
the transition piece is arranged at a front side of the mounting assembly, and an inclination angle of an upper end face of the transition piece is the same as that of the upper end face of the mounting assembly.

6. The wireless charging base of any one of claims 1-4, wherein the charging assembly comprises a charging transmitting coil and a charging control member; the charging control member is connected with the charging transmitting coil, and the charging control member is used for controlling the operation of the charging transmitting coil; a charging cavity is arranged at a lower part of the mounting assembly, the charging transmitting coil is arranged in the charging cavity, and the charging control member comprises a charging housing and a main charging control board; the charging housing is connected with the mounting assembly, the main charging control board is arranged in the charging housing, and the main charging control board is connected with the charging transmitting coil; the inclination angle of an upper end face of the charging housing is the same as that of the upper end face of the mounting assembly.

7. The wireless charging base of any one of claims 1-4, wherein the wireless charging base further comprises a beacon assembly, a positioning assembly and a limiting member, and the limiting member is arranged on an end face of the mounting assembly near the ground, and the limiting member is used for limiting positions of the beacon assembly and the positioning assembly; the beacon assembly is arranged at the front of the mounting assembly, and the positioning assembly is arranged at the back of the mounting assembly, adjacent to the charging control member; the beacon assembly and the positioning assembly correspond to a sensing assembly on the automatic snow clearing device, and the sensing assembly is used for sensing the positions of the beacon assembly and the positioning assembly, and guiding the automatic snow clearing device to move to a charging position according to the position of the beacon assembly; the sensing assembly corresponds to the positioning assembly at the charging position, and the automatic snow clearing device is charged through the charging assembly at the charging position.

8. A wireless charging base, **characterized in that** the wireless charging base is used for charging an automatic snow clearing device and comprises a mounting assembly and a charging assembly, wherein the charging assembly is arranged on the mounting assembly and is used for charging the automatic snow clearing device; a minimum height of the upper end face of the mounting assembly relative to a support face of the wireless charging base is not greater than 10 mm.

9. The wireless charging base of claim 8, wherein the minimum height of the upper end face of the mounting assembly relative to the support face of the wireless charging base is 0 mm to 9 mm.

10. The wireless charging base of claims 8 or 9, wherein the wireless charging base further comprises a transition piece, the transition piece is detachably connected with the mounting assembly; the transition piece is arranged at a front side of the mounting assembly.

11. The wireless charging base of claims 8 or 9, wherein the charging assembly comprises a charging transmitting coil and a charging control member; the charging control member is connected with the charging transmitting coil, and the charging control member is used for controlling the operation of the charging transmitting coil; a charging cavity is arranged at a lower part of the mounting assembly, the charging transmitting coil is arranged in the charging cavity, and the charging control member comprises a charging housing and a main charging control board; the charging housing is connected with the mounting assembly, the main charging control board is arranged in the charging housing, and the main charging control board is connected with the charging transmitting coil.

12. The wireless charging base of claims 8 or 9, wherein the wireless charging base further comprises a beacon assembly, a positioning assembly and a limiting member, and the limiting member is arranged on an end face of the mounting assembly near the ground, and the limiting member is used for limiting positions of the beacon assembly and the positioning assembly; the beacon assembly is arranged at the front of the mounting assembly, and the positioning assembly is arranged at the back of the mounting assembly, adjacent to the charging control member; the beacon assembly and the positioning assembly correspond to a sensing assembly on the automatic snow clearing device, and the sensing assembly is used for sensing the positions of the beacon assembly and the positioning assembly, and guiding the automatic snow clearing device to move to a charging position according to the position of the beacon assembly; the sensing assembly corresponds to the positioning assembly at the charging position, and the automatic snow clearing device is charged through the charging assembly at the charging position.

13. A wireless charging base, **characterized in that** the wireless charging base is used for charging an automatic snow clearing device and comprises a mounting assembly and a charging assembly, wherein the charging assembly is arranged on the mounting assembly and is used for charging the automatic snow clearing device;
the mounting assembly is embedded and fixed at a preset position of the ground, and a minimum height of the upper end face of the mounting assembly relative to the ground is not greater than 10 mm, so that the automatic snow clearing device is able to move from an non-preset position of the ground to the preset position without raising its head.

14. The wireless charging base of claim 13, wherein the minimum height of the upper end face of the mounting assembly relative to a support face of the wireless charging base is 0 mm to 9 mm.

15. The wireless charging base of claims 13 or 14, wherein the wireless charging base further comprises a transition piece, and the transition piece is detachably connected with the mounting assembly; the transition piece is arranged at a front side of the mounting assembly.

16. The wireless charging base of claims 13 or 14, wherein the charging assembly comprises a charging transmitting coil and a charging control member; the charging control member is connected with the charging transmitting coil, and the charging control member is used for controlling the operation of the charging transmitting coil; a charging cavity is arranged at a lower part of the mounting assembly, the charging transmitting coil is arranged in the charging cavity, and the charging control member comprises a charging housing and a main charging control board; the charging housing is connected with the mounting assembly, the main charging control board is arranged in the charging housing, and the main charging control board is connected with the charging transmitting coil.

17. The wireless charging base of claims 13 or 14, wherein the wireless charging base further comprises a beacon assembly, a positioning assembly and a limiting member, and the limiting member is arranged on an end face of the mounting assembly near the ground, and the limiting member is used for limiting positions of the beacon assembly and the positioning assembly; the beacon assembly is arranged at the front of the mounting assembly, and the positioning assembly is arranged at the back of the mounting assembly, adjacent to the charging control member; the beacon assembly and the positioning assembly correspond to a sensing assembly on the automatic snow clearing device, and the sensing assembly is used for sensing the positions of the beacon assembly and the positioning assembly, and guiding the automatic snow clearing device to move to a charging position according to the position of the beacon assembly; the sensing assembly corresponds to the positioning assembly at the charging position, and the automatic snow clearing device is charged through the charging assembly at the charging position.

18. A wireless charging base, **characterized in that** the wireless charging base is used for charging an automatic snow clearing device and comprises a mounting assembly and a charging assembly, wherein the charging assembly is arranged on the mounting assembly and is used for charging the automatic snow clearing device;
and the mounting assembly is embedded and fixed at a preset position of the ground, and an upper end face of the mounting assembly is flush with the ground, so that the automatic snow clearing device is able to move from an non-preset position of the ground to a preset position without raising its head.

19. The wireless charging base of claim 18, wherein the wireless charging base further comprises a transition piece, and the transition piece is detachably connected with the mounting assembly; the transition piece is arranged at a front side of the mounting assembly.

20. The wireless charging base of claim 18, wherein the charging assembly comprises a charging transmitting coil and a charging control member; the charging control member is connected with the charging transmitting coil, and the charging control member is used for controlling the operation of the charging transmitting coil; a charging cavity is arranged at a lower part of the mounting assembly, the charging transmitting coil is arranged in the charging cavity, and the charging control member comprises a charging housing and a main charging control board; the charging housing is connected with the mounting assembly, the main charging control board is arranged in the charging housing, and the main charging control board is connected with the charging transmitting coil.

21. The wireless charging base of claim 18, wherein the wireless charging base further comprises a beacon assembly, a positioning assembly and a limiting member, and the limiting member is arranged on an end face of the mounting assembly near the ground, and the limiting member is used for limiting positions of the beacon assembly and the positioning assembly; the beacon assembly is arranged at the front of the mounting assembly, and the positioning assembly is arranged at the back of the mounting assembly, adjacent to the charging control member; the beacon assembly and the positioning assembly correspond to a sensing assembly on the automatic snow clearing device, and the sensing assembly is used for sensing the positions of the beacon assembly and the positioning assembly, and guiding the automatic snow clearing device to move to a charging position according to the position of the beacon assembly; the sensing assembly corresponds to the positioning assembly at the charging position, and the automatic snow clearing device is charged through the charging assembly at the charging position.

22. A charging system of an automatic snow clearing device, **characterized in that** the charging system comprises an automatic snow clearing device and the wireless charging base of any one of claims 1 to 21, and the wireless charging base is used for charging the automatic snow clearing device.
